# EUROPEAN PATENT APPLICATION

(11) **EP 2 000 274 A2**
(43) Date of publication of application: **10.12.2008**
(21) Application number: 06843999.1
(22) Date of filing: 05.12.2006
(51) Int. Cl.: B29B 17/00

(54) **PROCESSING LINE FOR GRINDING MATERIALS IN PARTICULAR WASTE TIRES**

(30) Priority: 27.03.2006 RU 2006110454
(71) Applicant: ZADITEC LIMITED LLC., P:C: 1087 Nicosia (CY)
(72) Inventor: KULIKOV, Alexey Vladimirovich, St. Petersburg, 192241 (RU)
(74) Representative: Hatzmann, Martin
(86) International application number: PCT/RU2006/000654
(87) International publication number: WO 2007/111526

(57) **Abstract**

This invention relates to equipment for grinding different type materials mainly for recycling waste, defective or discarded during production car tires and rubber-containing production wastes etc in order to obtain reusable material.

The object of the invention is to increase the efficiency of grinding industrial rubber articles.

The line comprises the following units positioned in processing sequence: a conveyor (7), a material radially cutting machine (8), a mechanism (9) for arranging cut parts into a strip, a mechanism (2) for forced supplying material to the grinding area, a disintegrator (4) provided with a horizontally positioned cylindrical working tool (5), a sorter (6) embodied in the form of an inclined wire mesh filter, and a ventilation system for cooling the tool and removing a ground product, which is provided with discharging air ducts (15), a fan (16) and a magnetic separator (17).

The lower part of the supporting table (3) is embodied equidistant to the tool (5) and is provided with horizontal channels (13) across the entire width. The line is also provided with a supply air duct (20) connecting the grinding area with the atmosphere.

## Description

### Technical Field

This invention relates to the field of secondary materials processing and more particularly to grinding equipment for recycling waste, defective or discarded during production car tires and rubber-containing production wastes, etc in order to obtain reusable material.

### Background of the Art

Worn out industrial rubber articles account for a considerable amount of products of human activity, which contaminate the environment. One of the most urgent is the problem of utilization of worn out tires, especially large-size tires, due to the fact that only a small quantity of such tires undergoes recycling, which results in their accumulating at dump sites.

The simplest example of utilization of waste rubber articles is their burning which is widely used for worn out tires. However, this utilization method is known to substantially pollute the environment.

Recycling of industrial rubber articles and obtaining rubber crumb by known methods as a rule includes the following operations: cutting articles to pieces, grinding, removing reinforcement metal and textile elements from the rubber, further grinding of rubber crumb and separating it from small pieces of reinforcing elements. Used in grinding are: cutters, roller breakers, rotor-knife crushers, mills and shredders. Removing metal cord from rubber is generally performed by magnetic separators.

It is known to use cryogenic technology for embrittlement of rubber by cooling it down to the glass transition temperature and subsequent grinding (utility model patent RU 9185 for "Apparatus for tire recycling" patent application RU 93008432 for "Apparatus for cryogenic recycling of polymer materials ", patent application RU 93004316 for "Apparatus for grinding worn out tires", patent application RU 92008730 for "Apparatus for low temperature grinding", patent application RU 2001128875 for "Line for rubber waste recycling").

The common disadvantage of cryogenic recycling systems is high energy consumption connected with a need to obtain and maintain low temperatures in the operating chamber including the stage of mechanical grinding of articles into fragments. Besides, carrying out the low temperature process of rubber grinding requires application of sophisticated equipment, which is capable of operating in such conditions, thermal insulation of the whole system, insulation of cooled crumb from the atmospheric air and solution of a number of difficult technical problems.

There have also been known plants for grinding industrial rubber articles by mechanical breakage. For example there is a line known for recycling of worn out tires (patent RU 2140357), which comprises a machine for cutting tires to pieces, hammer crusher, finely dispersed breaking machine, machine for removal of cord units and sorter for fractioning of rubber pieces and crumb.

There has also been known a processing line for recycling of worn out tires, which comprises a debeading machine for preliminary removal of bead rings from the tires, machine for cutting tires to pieces, hammer crusher, finely dispersed breaking machine, machine for removal of cord units and sorter for fractioning of rubber pieces and crumb (patent RU 2043924).

The disadvantage of known processing lines is their low reliability and inefficient operation of equipment with respect to energy consumption, which is stipulated by application of the hammer crusher, which sets the high requirements for the material feed modes. Besides, one of the serious disadvantages is referred to low quality of the finished product - rubber crumb, which contains elements of textile and metal cords, as well as multi-staging processing and a wide scatter in obtained fractions.

There has also been known a line for recycling of worn out tires, which comprises machines connected by transportation facilities: a machine for preliminary grinding of tires, machine for obtaining big rubber crumb and machine for obtaining finely dispersed crumb, these two machines equipped with systems removing the textile cord, and between them there is a magnetic device installed above the transportation facility (patent RU 2145541). The removing system is an air discharge ventilation system designed as successively installed dust fan, cyclone and textile cord removal filter.

The disadvantage of this known line is low reliability and low quality of the finished product.

There is also known a line (patent RU 2172243) for utilization of worn out tires, which comprises machines connected by transportation facilities: a machine for preliminary grinding of tires, machine for obtaining big rubber crumb and machine for obtaining finely dispersed crumb, these two machines equipped with systems removing the textile cord, and between them there is a magnetic device installed above the transportation facility. The line is additionally equipped with a machine for radial cutting of tires and an additional machine for separating bead ring metal parts. These machines are connected by transportation facilities with a machine for grinding tires. The line is equipped with an additional magnetic device installed above the transportation facility after the machine for obtaining finely dispersed crumb. The line is equipped with additional devices for removal of textile cord, installed after magnetic separators. The textile cord vacuum system is executed in the form of a forced extract-and-input ventilation system.

The common disadvantage of mechanical processing methods of rubber containing articles is emission of high quantity of environmentally harmful volatile products from rubber heated up in the process of mechanical grinding. Moreover, the mechanical methods are characterized by high energy consumption and do not provide effective processing of rubber containing articles reinforced with metal, for example tires with metal cords, and do not allow obtaining quality secondary material, which is rubber crumb.

The closest to the herein proposed invention, in other words a prototype, is a device for disintegration of materials (useful model patent RU 44581 for "Device for disintegration of materials", published in 2005). The said device is equipped with a preliminary material preparation system, material forced feed system, fan system for cooling of operation area and working tool as well as a system for removal and separation of disintegration products. The device also comprises an impact type processing tool connected with the drive, which affects the processed material as a shock action with high supersonic frequency. The preliminary material preparation system is implemented as a die hole installed in the fixed support, designed as a table shaped and profiled according to its side planes of depression waves. The material forced feed system is executed as a combination of rotating rollers feeding the processed material into the die hole; the inlet hole of the latter is positioned with a minimum gap in relation to working tool. The removal and separation system of disintegration products comprises a fan, cooler and magnetic separator.

The disadvantage of the said device is the fact that the structure of the impact type cutting tool in combination with operating parts which do not have air gaps between each other does not allow increasing the degree of dispersion of processed materials and as a result decreases the processing efficiency. Moreover, the preliminary preparation system of material for grinding designed as a die hole does not enable to increase homogeneity of the processed material and only one fan cooling system available does not provide sufficient air flow into the operating area and working tool, which negatively affects the processing efficiency and leads to deterioration of cooling conditions for the tool, and, consequently to decreasing its endurance.

### Disclosure of the Invention

Objects of the present invention are to overcome the above mentioned disadvantages, and to increase the efficiency of grinding industrial rubber articles by improving the tool cooling system, which enables to increase the processing efficiency, homogeneity and degree of dispersion of processed ground material.

The said objects are attained in a line for grinding materials, in particular worn out tires, comprising the following equipment placed in a processing sequence: preliminary material preparation system, a mechanism for forced feeding material to the grinding area, a supporting table, a disintegrator provided with horizontally positioned cylindrical working tool, and ventilation system which is used for cooling the tool and removing a ground product and is provided with discharging air ducts, a fan and a magnetic separator, in accordance with the claimed invention the line is additionally provided with a sorter installed in the processing chain after the disintegrator and embodied in the form of an inclined wire mesh filter.

Other distinguishing features of the proposed line are the location of the supporting table operating surface in the horizontal plane coinciding with the axis of the disintegrator working tool, the lower part of the table, facing the tool is embodied in such a way that it is equidistant to the tool, its radius exceeding the radius of the tool by 2-5 mm, its vertical plane shaped as an arc is limited by an angle of 45-90°, and the said equidistant part of the table is provided with horizontal air channels across its width.

A further distinctive feature of the proposed invention from the prototype is the preliminary material preparation system comprising the following units positioned in processing sequence: a conveyor, a material radially cutting machine and a mechanism for arranging cut parts into a strip, the mechanism for forced feeding material to the grinding area designed with at least two lower and two upper operating rollers installed successively in the horizontal plane, the upper rollers are capable of vertical moving and the operating surface of the rollers is grooved.

Still further distinguishing features of the proposed structure are a disintegrator tool made as a set of disk cutters and installed in axial alignment with air gaps between them, each operating part of these cutters has a grooved surface, the grooves of each cutter located against the grooves of adjoining cutters chequer-wise and the cutting edge of each groove having a lenticular shape.

Besides, the line is provided with an additional supply air duct connecting the grinding area to the atmosphere, and is equipped with a removable bunker installed in the lower part of the sorter.

Contrastive analysis with the prototype shows that the claimed invention is characterized by new elements, their location relative to each other, their interconnections and the form of execution.

The performed patent search has shown that at the present time there has been known no line for grinding materials, mainly worn out tires having the same combination of essential features as the proposed one.

The execution of the preliminary material preparation system in the form of successively installed conveyor, a machine for radial cutting of materials and mechanism for arranging the cut parts into a strip as well as the sorter installed in processing chain after the disintegrator and designed in the form of inclined wire mesh filter, makes it possible to perform cutting and straightening of the cut parts prior to grinding, separation of ground parts by size on the sorter and removal of material crumbs falling beyond the required size, which settle down in the removable bunker installed in the lower part of the sorter, which, in its turn, enables to increase homogeneity of processed rubber crumb.

Supplying the claimed line for grinding material with an additional air duct connecting the lower and upper grinding areas with the atmosphere, execution of the disintegrator tool as a set of disk cutters with grooved operating surface, installed with air gaps between the cutters as well as making the lower part of the supporting table equidistant to the tool, provides additional air supply by the duct and enables to supply more materials for processing per time unit, which will increase the line processing capacity and the dispersion degree of the processed rubber crumb.

The chequer-wise location of grooves of every cutter of the disintegrator operating tool against the grooves of adjoining cutters will make it possible to reduce loads in the tool drive due to reduction of dynamic impact, which will increase the endurance of the tool and as a result the operation efficiency of the grinding line.

The execution of the cutting edge of the operating tool in a lenticular form has been selected by empiric methods and makes it possible to perform more uniform grinding of material, which increases its homogeneity. Besides, providing the operating part of disc cutters with grooves improves cooling conditions for the tool and does not allow their tarring from industrial rubber articles due to high temperature impacts occurring in the grinding area, which eventually will increase the tool operation rate.

The execution of lower part of the table equidistant to the tool with the radius exceeding the radius of the tool by 2-5 mm, and in the shape of arc limited by an angle of 45-90°, provides optimal conditions for air supply to the tool and as a result their better cooling. In case of overshooting the mentioned limits the amount of passed air decreases.

Installation of the upper rollers with a possibility of vertical movement makes it possible to perform regulation of the gap between the lower and upper rollers decreasing it in the course of movement of material, which will ensure reliable fixation of materials being ground.

In this regard all above mentioned features distinctive from the prototype make it possible to increase the efficiency of grinding material including worn out tires.

The abovementioned facts prove that the combination of features distinctive from the prototype makes it possible to apply the claimed technical solution for recycling waste, defective or discarded during production car tires and rubber-containing production wastes in order to obtain material suitable for further use, for example, in road construction, in manufacture of structural, thermal insulation and anticorrosive materials.

### Brief Description of the Drawings

The claimed invention is illustrated with the accompanying drawings, where:

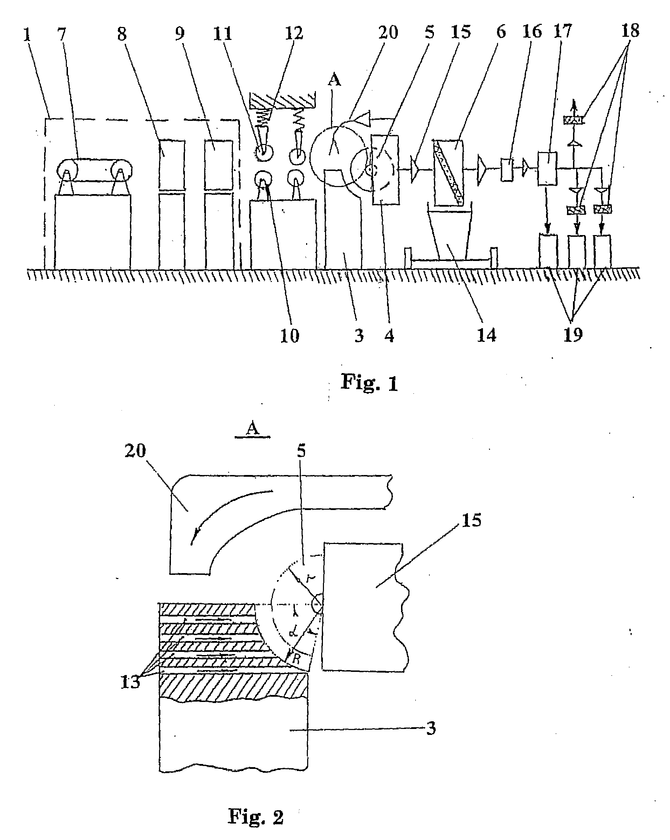

Fig.1 shows a schematic line for grinding materials;
Fig.2 shows a view A of Fig.1 (supporting table with disintegrator).

### Description of the Preferred Embodiments

Given below is a particular example of the structural embodiment of the claimed invention.

The claimed line for grinding materials, mainly processing of worn out tires comprises installed in a processing sequence a preliminary material preparation system 1, a mechanism 2 for forced supplying the material to the grinding area, a supporting table 3, a disintegrator 4 (Polytechnic Dictionary, issued by Soviet Encyclopedia, M., 1980, page 140), provided with horizontally positioned cylindrical working tool, a sorter 6 (Polytechnic Dictionary, issued by Soviet Encyclopedia, M., 1980, page 223) and a ventilation system for cooling of the tool and removing a ground product.

The preliminary material preparation system comprises successively installed and connected by transportation facilities, for example, a conveyor 7, a machine 8 for radial cutting of tires, for example debeading machine (see, for example, patents RU 2051034, 2044649 and patent US 3701296; patent DE 2629115 and others), a mechanism 9 for arranging the cut parts into a strip (see Polytechnic Dictionary, issued by Soviet Encyclopedia, M., 1980, page 414).

The mechanism 2 for forced supplying of material subjected to processing to the grinding area is executed with at least two fixed lower rollers 10 installed successively in the horizontal plane and located opposite to them at least two upper 11 leading rollers capable of vertical moving, for example loaded with springs 12.

Such a structural design of the mechanism 2 for forced supplying make it possible to provide a regulated gap between the respective upper and lower rollers, which reduces in the course of movement of material to grinding area. All the rollers 10 and 11 have grooved operating surface.

The supporting table 3 has an operating surface located in the horizontal plane coinciding with the axis of a working tool 5 of the disintegrator 4. Facing the tool 5 the lower part of the supporting table 3 is equidistant to the tool, its vertical plane shaped as an arc limited by the central angle α = 45-90° with radius "R" exceeding radius "r" of the tool by 2-5 mm. In the above mentioned lower part of the supporting table 3, along its whole width there are horizontal channels 13 providing air supply.

The working tool 5 of the disintegrator 4 is executed as a set of disk cutters having the grooved operating surface and installed with air gaps between them. The operating part of every disk cutter has a grooved surface. The grooves of every cutter of the disintegrator operating tool are located against the grooves of adjoining cutters chequer-wise and have a lenticular shape of the cutting edge.

The sorter 6 is embodied in the form of an inclined to air flow wire mesh filter, which has a removable bunker 14 in its lower part.

The ventilation system for cooling the tool and removing ground product is designed as a supply and exhaust system comprising discharging air ducts 15 connecting a fan 16, the sorter 6 and a magnetic separator 17 (Polytechnic Dictionary issued by Soviet Encyclopedia, M., 1980, page 471), filters 18 for separation of processed components of recycled tires and bunkers 19 for collecting metal wastes and ground rubber crumb (disintegrat). The grinding area (of the disintegrator 4) is equipped with an additional air duct 20 connecting the upper and lower parts of the area with the atmosphere.

The line for grinding worn out tires operates in compliance with the following method.

The worn out tires subjected to processing are loaded by a loader (not shown in the drawing) onto the conveyor 7 delivering them to the machine 8 for radial cutting where tires along with metal cords are cut to pieces which are further delivered to the mechanism 9 arranging them into strip. The straightened pieces are fed into regulated gap between the upper 11 and lower 10 rollers of the mechanism 2 for forced supplying, which is set in advance for a certain size due to movement of the upper 11 rollers in the vertical plane, with the given gap decreasing in the course of material movement to the grinding area which results in stable fixation of a tire between rollers.

The cut parts are hooked by grooved operating surfaces of the rollers 10 and 11 and delivered to the supporting table 3 and disintegrator 4. Passing through the disintegrator the tire pieces are ground by the disc cutters 5 along with metal cord into rubber crumb which is lifted by the air flow generated by the fan 16 and coming from the additional air duct 20 connected with the atmosphere.

Taken by the flow generated by the fan 16, the mixture of air with grinding products of a tire (rubber) passing through the discharging air duct 15, comes to the sorter 6, where rubber and crumb are fractioned by size, with big pieces removed by their own weight, dropping off the inclined wire mesh filter into the removable bunker 14. Then the mixture of air and crumb comes into the magnetic separator 17 where separation of metal cord parts from the flow of finely dispersed rubber crumb occurs with further delivery of the mixture into the separate bunkers 19.

### Industrial Applicability

The claimed line provides increasing efficiency of grinding industrial rubber parts including worn out tires and allows complete recycling of a tire including both tread and side parts. The line has high efficiency due to improvement of cooling of the operating tools and grinding area.

## Claims

1. A line for grinding materials in particular waste tires comprising the following equipment placed in a processing sequence: a preliminary material preparation system, a mechanism for forced supplying said material to a grinding area, a supporting table, a disintegrator provided with a horizontally positioned cylindrical working tool and a ventilation system used for cooling the tool and removing a ground product, which is provided with discharging air ducts, a fan and a magnetic separator, **characterized in that** the said line is additionally provided with a sorter installed in the processing sequence after the disintegrator and embodied in the form of an inclined mesh filter, said line being also provided with an additional supply air duct connecting the grinding area with the atmosphere, said preliminary material preparation system comprising following consecutively positioned units: a conveyor, a cutting machine for radially cutting the material and a mechanism for arranging cut parts into a strip, said disintegrator tool being made as a set of disk cutters having respective grooved surfaces and installed with an air gap between them, an operating surface of said supporting table being located in the horizontal plane coinciding with an axis of the disintegrator working tool, the lower part of the table facing the tool is equidistant to the tool and has a radius exceeding the radius of the tool by 2-5 mm, with its vertical plane shaped as an arc limited by an angle of 45-90°, said equidistant part of the table being provided with horizontal air channels across its width, the grooves of each cutter of said disintegrator tool are located against the grooves of adjoining disc cutters in a chequer-wise way and have a lenticular shape of the cutting edge.

2. A line according to claim 1, **characterized in that** the mechanism for forced supplying said material to the grinding area is executed with at least two lower and two upper operating rollers installed successively in the horizontal plane, the upper operating rollers capable of vertical moving.

3. A line according to claim 2, **characterized in that** the operating surface of the operating rollers is grooved.

4. A line according to claim 1, **characterized in that** the line is equipped with a removable bunker installed in the lower part of the sorter.
